# EUROPEAN PATENT SPECIFICATION

(11) **EP 2 024 432 B1**
(45) Date of publication and mention of the grant of the patent: **18.11.2009**
(21) Application number: 07734653.4
(22) Date of filing: 15.05.2007
(51) Int. Cl.: C08J 11/22

(54) **TREATMENT OF POLYSILAZANE WASTE**
BEHANDLUNG VON POLYSILAZAN-ABFALL
TRAITEMENT DE DÉCHETS À BASE DE POLYSILAZANES

(30) Priority: 18.05.2006 US 419009
(43) Date of publication of application: 18.02.2009
(73) Proprietor: AZ Electronic Materials USA Corp., Somerville, NJ 08876 (US)
(72) Inventor: GURMAN, Joshua, Marlboro, NJ 07746 (US); OBERLANDER, Joseph E., Phillipsburg, NJ 08865 (US); CARL, Tom, Portland, OR 97266 (US); KICKER, Bruce, Colleyville, TX 76034 (US)
(74) Representative: Rippel, Hans Christoph
(86) International application number: PCT/IB2007/001347
(87) International publication number: WO 2007/135556

(56) References cited:
- EP-A- 1 296 358
- US-A1- 2005 027 089
- US-A1- 2005 279 255
- US-B1- 6 190 788
- US-B1- 6 310 168
- US-B1- 6 338 868

## Description

### Field of the Invention

The present invention relates to a method of treating polysilazane waste material in order to facilitate a safer, more cost effective disposal of the waste.

### Background of the Invention

Polysilazanes are used to produce solid silicate (i.e. glass) coatings on substrate surfaces, for example, semiconductor devices and flat panel screens. Following the coating process, an edge bead removal process, using an edge bead remover solvent system, is performed. After the edge bead removal process, all residual polysilazane is rinsed from the equipment surfaces using organic solutions. The polysilazane-organic process waste streams are then rinsed down the drain, through a transfer line to a process waste holding container. After filling, the process waste holding container can be sealed or the liquid can be transferred to other waste containers to be transferred for waste disposal.

The current disposal process entails having the unstabilized polysilazane-organic process waste stream collected in a waste holding container until the container is full. Once the holding container is full, the waste is transferred to a vented drum for interim stabilization of the waste. Finally, the drum is sealed and sent for waste disposal.

The current disposal process has several problems. Unstabilized polysilazane waste can react with unintentionally present contaminants (i.e. OH-donor chemicals; water, alcohols, aldehydes, etc.). The reaction causes a decomposition of the polysilazane to produce hydrogen, ammonia and silane gases. The polysilazane-organic waste must be stabilized (also known as neutralized) so that if the waste solution comes into contact with any unintentional contaminants it will not undergo further decomposition.

In addition, the waste drums are left vented to allow for the polysilazane-organic waste to off-gas, with the recommended holding period being ten days. If this recommended vent time is insufficient for the polysilazane-organic waste to "stabilize" it will continue to off-gas. This further decomposition can result in deformation of the waste containers (i.e. bulging) which can ultimately lead to the complete catastrophic failure of the container. This poses a serious potential health and safety issue.

In addition, if the wrong material is used to neutralize the polysilazane or excess solution is used to stabilize the polysilazane-organic waste or added at the wrong point, you can get a two phase separation of the solutions, or the reaction with the waste can form a solid gel or a salt precipitate. All of these would be undesirable side reactions.

Thus, there is a need for a safer, less problematic way of treating polysilazane waste.

### SUMMARY OF THE INVENTION

The present invention is related to a process for treating polysilazane waste comprising contacting the polysilazane waste with a treatment stabilizer selected from the group consisting of an OH-containing compound and an OH-containing compound and alkaline mixture. The treatment stabilizer, or treatment stabilizer solution, can contact the polysilazane waste by (a) injecting the treatment stabilizer into a waste stream of polysilazane waste; (b) adding the treatment stabilizer into a container containing polysilazane waste; or (c) adding the polysilazane waste into a container containing treatment stabilizer.

Examples of the OH containing compound include, but are not limited to, for example, alcohols, ether alcohols, glycols, and carboxylic acids, and mixtures thereof. Examples of the alcohols include, but are not limited to, methanol, ethanol, n-propanol, isopropanol, n-butanol, sec-butanol, phenol, and the like. Examples of ether alcohols include, but are not limited to, for example, 1-butoxyethoxy-2-propanol, 3-methyl-3-methoxybutanol, ethylene glycol n-butyl ether, ethylene glycol phenyl ether, ethylene glycol propyl ether, diethylene glycol hexyl ether, diethylene glycol monoethyl ether, diethylene glycol monomethyl ether, diethylene glycol monobutyl ether, diethylene glycol monopropyl ether, propylene glycol ethyl ether, propylene glycol isobutyl ether, propylene glycol monomethyl ether, propylene glycol monobutyl ether, propylene glycol monoethyl ether, propylene glycol n-propyl ether, propylene glycol phenyl ether, propylene glycol-t-butyl ether, dipropylene glycol ethyl ether, dipropylene glycol monobutyl ether, dipropylene glycol monomethyl ether, dipropylene glycol monopropyl ether, triethylene glycol ethyl ether, triethylene glycol methyl ether, triethylene glycol n-butyl ether, tripropylene glycol methyl ether, tripropylene glycol n-butyl ether, and mixtures thereof. Examples of glycols, include, but are not limited to, for example, ethylene glycol, propylene glycol, hexylene glycol, butanediol, glycerol, and the like, and mixtures thereof. Examples of carboxylic acids include, but are not limited to, for example, unbranched saturated or unsaturated monocarboxylic acids: methanoic acid (formic acid), ethanoic acid (acetic acid), propanoic acid (propionic acid), pentanoic acid (valeric acid), hexanoic acid (caproic acid); branched saturated or unsaturated monocarboxylic acids: 2-methylpentanoic acid, 2-ethylhexanoic acid; unbranched saturated or unsaturated di- or tricarboxylic acids: propanedioic acid (malonic acid), butanedioic acid (succinic acid), pentanedioic acid (glutaric acid), hexanedioic acid (adipic acid); aromatic mono-, di-, and tricarboxylic acids: benzoic acid, 2-carboxybenzoic acid (phthalic acid), 3-carboxybenzoic acid (isophthalic acid), 4-carboxybenzoic acid (terephthalic acid), 3,4-dicarboxybenzoic acid (trimellitic acid); hydroxy acids: hydroxyphenylacetic acid (mandelic acid), 2-hydroxypropionic acid (lactic acid), hydroxysuccinic acid (maleic acid), 2,3-dihydroxybutanedioic acid (tartaric acid), 2-hydroxy-1,2,3-propanetricarboxylic acid (citric acid), ascorbic acid, 2-hydroxybenzoic acid (salicylic acid), 3,4,5-trihydroxybenzoic acid (gallic acid), and the like , and mixtures thereof. Examples of the alkaline include, but are not limited to, sodium hydroxide, potassium hydroxide, ammonium hydroxide, tetramethyl ammonium hydroxide, monoethanolamine, diethanolamine, triethanolamine, ammonium hydroxide, diethylamine, dimethylamine, trimethanolamine, butyldimethylamine, dibutylmethylamine, trihydroxyamine, monopropylamine, dipropylamine, tripropylamine, monopropanolamine, dipropanolamine, tripropanolamine, monoisopropanolamine, diisopropanolamine, triisopropanolamine, n-butylamine, t-butylamine, methylpropylamine, ethyldimethylamine, 2-amino-1,3-propanediol, 2-amino-2-methyl-1,3-propanediol, ethanolpropanolamine, 2-(butylamino)ethanol, 2-(cyclohexylamino)ethanol, 2-amino-1-butanol, 2-(2'-aminoethoxy)ethanol, bis(aminoethyl)amine, bis(aminopropyl)amine, tris(aminoethyl)amine, tris(aminopropyl)amine, pyridine, piperidine, morpholine, aniline, and mixtures thereof.

The treatment stabilizer is typically added to the polysilazane waste in a ratio of treatment stabilizer to polysilazane waste of from about 1:2 to about 1:14 with ratios of about 1:4 to about 1:10, about 1:6 to about 1:9, and about 1:7 to about 1:9 also contemplated. A carrier solvent for the treatment stabilizer is optional.

The invention also provides for the use of an OH-containing compound or an OH-containing compound und alkaline mixture as a treatment stabilizer for treating polysilazane waste.

### DETAILED DESCRIPTION OF THE INVENTION

The present invention is related to a process for treating polysilazane waste comprising contacting the polysilazane waste with a treatment stabilizer selected from the group consisting of an OH-containing compound and an OH-containing compound and alkaline mixture. The treatment stabilizer, or treatment stabilizer solution, can contact the polysilazane waste by (a) injecting the treatment stabilizer into a waste stream of polysilazane waste; (b) adding the treatment stabilizer into a container containing polysilazane waste; or (c) adding the polysilazane waste into a container containing treatment stabilizer.

Examples of the OH containing compound include, but are not limited to, for example, alcohols, ether alcohols, glycols, and carboxylic acids, and mixtures thereof. Examples of the alcohols include, but are not limited to, methanol, ethanol, n-propanol, isopropanol, n-butanol, sec-butanol, phenol, and the like. Examples of ether alcohols include, but are not limited to, for example, 1-butoxyethoxy-2-propanol, 3-methyl-3-methoxybutanol, ethylene glycol n-butyl ether, ethylene glycol phenyl ether, ethylene glycol propyl ether, diethylene glycol hexyl ether, diethylene glycol monoethyl ether, diethylene glycol monomethyl ether, diethylene glycol monobutyl ether, diethylene glycol monopropyl ether, propylene glycol ethyl ether, propylene glycol isobutyl ether, propylene glycol monomethyl ether, propylene glycol monobutyl ether, propylene glycol monoethyl ether, propylene glycol n-propyl ether, propylene glycol phenyl ether, propylene glycol-t-butyl ether, dipropylene glycol ethyl ether, dipropylene glycol monobutyl ether, dipropylene glycol monomethyl ether, dipropylene glycol monopropyl ether, triethylene glycol ethyl ether, triethylene glycol methyl ether, triethylene glycol n-butyl ether, tripropylene glycol methyl ether, tripropylene glycol n-butyl ether, and mixtures thereof. Examples of glycols, include, but are not limited to, for example; ethylene glycol, propylene glycol, hexylene glycol, butanediol, glycerol, and the like, and mixtures thereof. Examples of carboxylic acids include, but are not limited to, for example, unbranched saturated or unsaturated monocarboxylic acids: methanoic acid (formic acid), ethanoic acid (acetic acid), propanoic acid (propionic acid), pentanoic acid (valeric acid), hexanoic acid (caproic acid); branched saturated or unsaturated monocarboxylic acids: 2-methylpentanoic acid, 2-ethylhexanoic acid; unbranched saturated or unsaturated di- or tricarboxylic acids: propanedioic acid (malonic acid), butanedioic acid (succinic acid), pentanedioic acid (glutaric acid), hexanedioic acid (adipic acid); aromatic mono-, di-, and tricarboxylic acids: benzoic acid, 2-carboxybenzoic acid (phthalic acid), 3-carboxybenzoic acid (isophthalic acid), 4-carboxybenzoic acid (terephthalic acid), 3,4-dicarboxybenzoic acid (trimellitic acid); hydroxy acids: hydroxyphenylacetic acid (mandelic acid), 2-hydroxypropionic acid (lactic acid), hydroxysuccinic acid (maleic acid), 2,3-dihydroxybutanedioic acid (tartaric acid), 2-hydroxy-1,2,3-propanetricarboxylic acid (citric acid), ascorbic acid, 2-hydroxybenzoic acid (salicylic acid), 3,4,5-trihydroxybenzoic acid (gallic acid), and the like , and mixtures thereof. Examples of the alkaline include, but are not limited to, sodium hydroxide, potassium hydroxide, ammonium hydroxide, tetramethyl ammonium hydroxide, monoethanolamine, diethanolamine, triethanolamine, ammonium hydroxide, diethylamine, dimethylamine, trimethanolamine, butyldimethylamine, dibutylmethylamine, trihydroxyamine, monopropylamine, dipropylamine, tripropylamine, monopropanolamine, dipropanolamine, tripropanolamine, monoisopropanolamine, diisopropanolamine, triisopropanolamine, n-butylamine, t-butylamine, methylpropylamine, ethyldimethylamine, 2-amino-1,3-propanediol, 2-amino-2-methyl-1,3-propanediol, ethanolpropanolamine, 2-(butylamino)ethanol, 2-(cyclohexylamino)ethanol, 2-amino-1-butanol, 2-(2'-aminoethoxy)ethanol, bis(aminoethyl)amine, bis(aminopropyl)amine, tris(aminoethyl)amine, tris(aminopropyl)amine, pyridine, piperidine, morpholine, aniline, and mixtures thereof.

The treatment stabilizer is typically added to the polysilazane waste in a ratio of treatment stabilizer to polysilazane waste of from about 1:2 to about 1:14 with ratios of about 1:4 to about 1:10, about 1:6 to about 1:9, and about 1:7 to about 1:9 also contemplated. A carrier solvent for the treatment stabilizer is optional.

With the current invention, two major problems have been identified and are solved. If no or insufficient stabilizer has been added or the hold time used is not long enough, the polysilazane-organic waste will continue to decompose. This can lead to further off-gassing causing the drums to overpressure and bulge which, in turn, can result in drum rupture. As previously indicated, if the wrong neutralization or stabilization solution or too much stabilizing solution is added the polysilazane waste and stabilization solution can interact forming a two phase separation limiting the stabilization or the solutions can react causing polymerization (i.e. solid gel formation) or precipitation (i.e. silicate salt), in the waste holding container. This would result in substantial extra cost in process down time because of the slowed stabilization and/or necessary clean-up of the waste holding tank from the solidified gel or precipitated waste solution.

We have found that there exists a process window. If too little neutralization or stabilizing solution is added, the residual polysilazane can continue to react with materials present in the waste stream to off-gas. If too much neutralization or stabilizing solution is added to the waste solution, a gel formation or precipitation can result. If the wrong neutralization or stabilizing solution is used, the solution will not adequately be stabilized similar to too little addition or a two phase separation can occur which will affect the contact of the polysilazane with the stabilizer slowing the stabilization rate, or can result in gel formation or precipitation making transfer and disposal more difficult.

Using a combination of an OH containing compound (e.g. alcohols, ether alcohols, glycols, carboxylic acids) alone or in conjunction with a reaction initiator (e.g. alkaline), it was possible to neutralize or stabilize the polysilazane waste solution. The absolute degree of neutralization or stabilization may depend upon the relative activity, quantity and concentration of the OH containing compound alone or in conjunction with the reaction initiator mixture added. When used in combination, the amount of the alkaline that is added to the OH containing compound ranges from about 2% to about 20%, based on the amount of the OH containing compound present.

Examples of the OH containing compound include, but are not limited to, for example, alcohols, ether alcohols, glycols, and carboxylic acids, and mixtures thereof. Examples of the alcohol include, but are not limited to, methanol, ethanol, n-propanol, isopropanol, n-butanol, sec-butanol, phenol, and the like. Examples of ether alcohols include, but are not limited to, for example, 1-butoxyethoxy-2-propanol, 3-methyl-3-methoxybutanol, ethylene glycol n-butyl ether, ethylene glycol phenyl ether, ethylene glycol propyl ether, diethylene glycol hexyl ether, diethylene glycol monoethyl ether, diethylene glycol monomethyl ether, diethylene glycol monobutyl ether, diethylene glycol monopropyl ether, propylene glycol ethyl ether, propylene glycol isobutyl ether, propylene glycol monomethyl ether, propylene glycol monobutyl ether, propylene glycol monoethyl ether, propylene glycol n-propyl ether, propylene glycol phenyl ether, propylene glycol-t-butyl ether, dipropylene glycol ethyl ether, dipropylene glycol monobutyl ether, dipropylene glycol monomethyl ether, dipropylene glycol monopropyl ether, triethylene glycol ethyl ether, triethylene glycol methyl ether, triethylene glycol n-butyl ether, tripropylene glycol methyl ether, tripropylene glycol n-butyl ether, and mixtures thereof. Examples of glycols, include, but are not limited to, for example, ethylene glycol, propylene glycol, hexylene glycol, butanediol, glycerol, and the like, and mixtures thereof. Examples of carboxylic acids include, but are not limited to, for example, unbranched saturated or unsaturated monocarboxylic acids: methanoic acid (formic acid), ethanoic acid (acetic acid), propanoic acid (propionic acid), pentanoic acid (valeric acid), hexanoic acid (caproic acid); branched saturated or unsaturated monocarboxylic acids: 2-methylpentanoic acid, 2-ethylhexanoic acid; unbranched saturated or unsaturated di- or tricarboxylic acids: propanedioic acid (malonic acid), butanedioic acid (succinic acid), pentanedioic acid (glutaric acid), hexanedioic acid (adipic acid); aromatic mono-, di-, and tricarboxylic acids: benzoic acid, 2-carboxybenzoic acid (phthalic acid), 3-carboxybenzoic acid (isophthalic acid), 4-carboxybenzoic acid (terephthalic acid), 3,4-dicarboxybenzoic acid (trimellitic acid); hydroxy acids: hydroxyphenylacetic acid (mandelic acid), 2-hydroxypropionic acid (lactic acid), hydroxysuccinic acid (maleic acid), 2,3-dihydroxybutanedioic acid (tartaric acid), 2-hydroxy-1,2,3-propanetricarboxylic acid (citric acid), ascorbic acid, 2-hydroxybenzoic acid (salicylic acid), 3,4,5-trihydroxybenzoic acid (gallic acid), and the like, and mixtures thereof. Examples of the alkaline include, but are not limited to, sodium hydroxide, potassium hydroxide, ammonium hydroxide, tetramethyl ammonium hydroxide, monoethanolamine, diethanolamine, triethanolamine, ammonium hydroxide, diethylamine, dimethylamine, trimethanolamine, butyldimethylamine, dibutylmethylamine, trihydroxyamine, monopropylamine, dipropylamine, tripropylamine, monopropanolamine, dipropanolamine, tripropanolamine, monoisopropanolamine, diisopropanolamine, triisopropanolamine, n-butylamine, t-butylamine, methylpropylamine, ethyldimethylamine, 2-amino-1,3-propanediol, 2-amino-2-methyl-1,3-propanediol, ethanolpropanolamine, 2-(butylamino)ethanol, 2-(cyclohexylamino)ethanol, 2-amino-1-butanol, 2-(2'-aminoethoxy)ethanol, bis(aminoethyl)amine, bis(aminopropyl)amine, tris(aminoethyl)amine, tris(aminopropyl)amine, pyridine, piperidine, morpholine, aniline, and mixtures thereof.

Another optional material added to the treatment stabilizer is a carrier solvent. The carrier solvent is one which is not reactive with the polysilazane. Examples include hydrocarbon solvents (for example, tetrahydronaphthalene), ether acetates (for example, propylene glycol monomethyl ether acetate), and other similar solvents that do not react with polysilazane. Some preferred embodiments contain a carrier solvent having a flash point greater than 60°C (140°F) to form a treatment stabilizer solution.

One of the benefits of the present invention is to allow for the disposal of the treated polysilazane waste as non-hazardous waste. When a treatment stabilizer comprising a carrier solvent and an alcohol and an alcohol and alkaline mixture is used in an appropriate amount, the flash point of the treated polysilazane waste, when a high flash point carrier solvent is used, is greater than 60°C. This makes disposal simpler as the waste is now shipped as non-hazardous and becomes useful for fuel blending. Therefore, waste streams of solvent from other facilities, or even the same facility where polysilazane materials are coated, could be used as the carrier solvent, provided the flash point of the waste stream is greater than 60°C.

The inventive process offers three major advantages over disposal of unstabilized waste:
1) it is safer,
2) it saves time
3) it is more cost effective.

By stabilizing the polysilazane waste prior to filing waste drums to be sent to waste storage sites, the potential for the unstabilized solution to off-gas causing pressurization of the drum potentially resulting in catastrophic drum failure is eliminated. Also since all the polysilazane waste is stabilized prior to the filling of the waste drums, the waste transferred to drums for disposal do not have to sit for a period of time to vent off gases that could build up if the present process was not used. Finally, the stabilized waste, if desired, could be disposed of by fuel blending for heat recovery rather than requiring it to be incinerated. The unstabilized waste, itself, is too unstable or reactive so cannot be disposed of by fuel blending. The cost to incinerate the waste is approximately three (3) times that of disposing of the waste by fuel blending.

When the treatment stabilizer is contacted with the polysilazane waste, the contact can occur in situ. That is, as the polysilazane waste is generated and placed into a holding tank, an amount of the treatment stabilizer is then added to the holding tank. Since the amount of the treatment stabilizer will be greater than the amount of the polysilazane waste, there will be intermixing without the need for a separate mixer.

In batch situations, where the polysilazane waste is held in a holding tank and then pumped into drums, the treatment stabilizer is added to the drum after the polysilazane waste is pumped into the drum or the drum is precharged with an amount of the treatment stabilizer, and then the drum contents are stirred.

The following examples will provide detailed illustrations of the methods of utilizing the present invention. These examples are not intended, however, to limit or restrict the scope of the invention in any way and should not be construed as providing conditions, parameters or values which must be utilized exclusively in order to practice the present invention. Unless otherwise specified, all parts and percents are by weight.

### EXAMPLES

Stabilization experiments were conducted using absolute pressure measurement as an indication of rate and degree of stabilization.

Pressure experiments were conducted stainless steel pipes which were capped on both ends and welded shut. There was a 6.35 mm (¼ inch) threaded opening in the top cap. In this ¼ inch threaded opening was threaded a 6.35 mm (¼ inch) pipe connected to a tee. Off to the side of the tee was a length of pipe with a pressure regulator at the top of the tee with a shut-off valve which was fitted with an injection septum to allow for introduction of the simulated polysilazane waste and stabilization solution. The steel pipes were about 52.07 cm (20.5 inch) to 55.88 cm (22 inch) tall having an outer diameter of 5.08 cm (2 inch). The inner capacity of the three pressure vessels used were: 680 ml for pressure vessel-1, 670 ml for pressure vessel-2, and 700 ml for pressure vessel-3.

Approximately 90 ml of simulated polysilazane organic waste solution (Spinfil® 45002 (polysilazane as a di-n-butyl ether solution) and either AZ® HC-100 (hydrocarbon mixture rich in aromatics) or AZ Spinfil® Rinse 500 EBR H (50/50 (wt/wt) blend of decahydronaphthalene and 1,2,3,4,-tetrahydronaphthalene) at a 25:1 ratio) was injected into the pressure vessels. Following that, the following treatment stabilizer solutions were added to the pressure vessel to evaluate their efficacy by measuring the absolute pressure (bar) generated as a function of time:
(a) 10 ml methanol (pressure vessel not shaken for 60 minutes)
(b) 10 ml ethanol
(c) 5 ml ethanol /10% ethanolamine
(d) 10 m) ethanol /10% ethanolamine
(e) 6 ml ethanol /10% ethanolamine
(f) 8 ml ethanol /10% ethanolamine

After a period of about 6 hours, most of the treatment stabilizer solutions, (a) and (d) to (f), had stabilized the waste (absolute pressure reaching about 1.379 bar (20 psi)). With longer contact times, the treatment stabilizer solutions (b) and (c) would be expected to also stabilize the waste.

Except in the Examples, or where otherwise explicitly indicated, all numerical quantities in this description specifying amounts of materials, reaction conditions (such as temperature), molecular weights, number of carbon atoms, and the like, are to be understood as modified by the word "about."

While the invention has been explained in relation to its preferred embodiments, it is to be understood that various modifications thereof will become apparent to those skilled in the art upon reading the specification. Therefore, it is to be understood that the invention disclosed herein is intended to cover such modifications as fall within the scope of the appended claims.

## Claims

1. A process for treating polysilazane waste comprising contacting the polysilazane waste with a treatment stabilizer selected from the group consisting of an OH-containing compound and an OH-containing compound and alkaline mixture.

2. The process of claim 1, wherein the contact of polysilazane waste and treatment stabilizer occurs by (a) injecting the treatment stabilizer into a waste stream of polysilazane waste; (b) adding the treatment stabilizer into a container containing polysilazane waste; or (c) adding the polysilazane waste into a container containing treatment stabilizer.

3. The process of claim 1 or 2, wherein the treatment stabilizer further comprises a carrier solvent.

4. The process of any of claims 1 to 3, wherein the treatment stabilizer is an OH-containing compound is selected from alcohols, ether alcohols, glycols, carboxylic acids, and mixtures thereof.

5. The process of claim 4, wherein the OH-containing compound is selected from alcohols, ether alcohols, and mixtures thereof.

6. The process of any of claims 1 to 3, wherein the treatment stabilizer is an OH-containing compound and alkaline mixture.

7. The process of claim 6, wherein the OH-containing compound is selected from alcohols, ether alcohols, glycols, carboxylic acids, and mixtures thereof.

8. The process of claim 7, wherein the OH-containing compound is selected from alcohols, ether alcohols, and mixtures thereof.

9. The process of any of claims 1 to 8, wherein the treatment stabilizer is added to the polysilazane waste in a ratio of from about 1:2 treatment stabilizer:polysilazane waste to about 1:14 treatment stabilizer:polysilazane waste.

10. The process of claim 9, wherein the treatment stabilizer is added to the polysilazane waste in a ratio of from about 1:4 treatment stabilizer:polysilazane waste to about 1:10 treatment stabilizer:polysilazane waste.

11. The process of claim 10, wherein the treatment stabilizer is added to the polysilazane waste in a ratio of from about 1:6 treatment stabilizer:polysilazane waste to about 1:9 treatment stabilizer:polysilazane waste.

12. The process of claim 11, wherein the treatment stabilizer is added to the polysilazane waste in a ratio of from about 1:7 treatment stabilizer:polysilazane waste to about 1:9 treatment stabilizer:polysilazane waste.

13. The use of an OH-containing compound or an OH-containing compound and alkaline mixture as a treatment stabilizer for treating polysilazane waste.

14. The use of claim 13, where the treatment stabilizer further comprises a carrier solvent.

## Patentansprüche

1. Verfahren zur Behandlung von Polysilazan-Abfall umfassend das Zusammenführen des Polysilazan-Abfalls mit einem Behandlungsstabilisator ausgewählt aus der Gruppe bestehend aus einer OH- enthaltenden Verbindung und einer OH- enthaltenden Verbindung und einer basischen Mischung.

2. Verfahren nach Anspruch 1, wobei das Zusammenführen des Polysilazan-Abfalls und des Behandlungsstabilisators durch (a) Einspeisen des Behandlungsstabilisators in einen Abfallsstrom von Polysilazan-Abfall, (b) Hinzugeben des Behandlungsstabilisators in ein Behältnis, das den Polysilazan-Abfall enthält, oder (c) Hinzugeben des Polysilazan-Abfalls in ein Behältnis, das den Behandlungsstabilisator enthält, erfolgt.

3. Verfahren nach Anspruch 1 oder 2, wobei der Behandlungsstabilisator weiterhin ein Trägerlösungsmittel umfasst.

4. Verfahren nach einem der Ansprüche 1 bis 3, wobei der Behandlungsstabilisator eine OH- enthaltende Verbindung ist, die ausgewählt ist aus Alkoholen, Etheralkoholen, Glykolen, Carbonsäuren und Mischungen davon.

5. Verfahren nach Anspruch 4, wobei die OH- enthaltende Verbindung ausgewählt ist aus Alkoholen, Etheralkoholen und Mischungen davon.

6. Verfahren nach einem der Ansprüche 1 bis 3, wobei der Behandlungsstabilisator eine OH- enthaltende Verbindung und eine basische Mischung ist.

7. Verfahren nach Anspruch 6, wobei die OH- enthaltende Verbindung ausgewählt ist aus Alkoholen, Etheralkoholen, Glykolen, Carbonsäuren und Mischungen davon.

8. Verfahren nach Anspruch 7, wobei die OH- enthaltende Verbindung ausgewählt ist aus Alkoholen, Etheralkoholen und Mischungen davon.

9. Verfahren nach einem der Ansprüche 1 bis 8, wobei der Behandlungsstabilisator dem Polysilazan-Abfall in einem Verhältnis von etwa 1:2 Behandlungsstabilisator:Polysilazan-Abfall bis etwa 1:14 Behandlungsstabilisator:Polysilazan-Abfall hinzugegeben wird.

10. Verfahren nach Anspruch 9, wobei der Behandlungsstabilisator dem Polysilazan-Abfall in einem Verhältnis von etwa 1:4 Behandlungsstabilisator: Polysilazan-Abfall bis etwa 1:10 Behandlungsstabilisator:Polysilazan-Abfall hinzugegeben wird.

11. Verfahren nach Anspruch 10, wobei der Behandlungsstabilisator dem Polysilazan-Abfall in einem Verhältnis von etwa 1:6 Behandlungsstabilisator: Polysilazan-Abfall bis etwa 1:9 Behandlungsstabilisator:Polysilazan-Abfall hinzugegeben wird.

12. Verfahren nach Anspruch 11, wobei der Behandlungsstabilisator dem Polysilazan-Abfall in einem Verhältnis von etwa 1:7 Behandlungsstabilisator: Polysilazan-Abfall bis etwa 1:9 Behandlungsstabilisator:Polysilazan-Abfall hinzugegeben wird.

13. Verwendung einer OH- enthaltenden Verbindung oder einer OHenthaltenden Verbindung und einer basischen Mischung als Behandlungsstabilisator zur Behandlung von Polysilazan-Abfall.

14. Verwendung nach Anspruch 13, wobei der Behandlungsstabilisator weiterhin ein Trägerlösungsmittel umfasst.

## Revendications

1. Procédé de traitement des déchets de polysilazane comprenant la mise en contact des déchets de polysilazane avec un stabilisateur de traitement choisi dans le groupe constitué d'un composé contenant un OH et d'un mélange d'un composé contenant un OH et d'un alcalin.

2. Procédé selon la revendication 1, dans lequel le contact des déchets de polysilazane et du stabilisateur de traitement survient (a) en injectant le stabilisateur de traitement dans un courant de déchets de polysilazane ; (b) en ajoutant le stabilisateur de traitement dans un récipient contenant des déchets de polysilazane ; ou (c) en ajoutant les déchets de polysilazane dans un récipient contenant un stabilisateur de traitement.

3. Procédé selon les revendications 1 ou 2, dans lequel le stabilisateur de traitement comprend en outre un milieu solvant.

4. Procédé selon l'une quelconque des revendications 1 à 3, dans lequel le stabilisateur de traitement est un composé contenant un OH choisi parmi des alcools, des alcools d'éther, des glycols, des acides carboxyliques et des mélanges de ceux-ci.

5. Procédé selon la revendication 4, dans lequel le composé contenant un OH est choisi parmi des alcools, des alcools d'éther, et des mélanges de ceux-ci.

6. Procédé selon l'une quelconque des revendications 1 à 3, dans lequel le stabilisateur de traitement est un mélange de composé contenant un OH et d'un alcalin.

7. Procédé selon la revendication 6, dans lequel le composé contenant un OH est choisi parmi des alcools, des alcools d'éther, des glycols, des acides carboxyliques et des mélanges de ceux-ci.

8. Procédé selon la revendication 7, dans lequel le composé contenant un OH est choisi parmi des alcools, des alcools d'éther et des mélanges de ceux-ci.

9. Procédé selon l'une quelconque des revendications 1 à 8, dans lequel le stabilisateur de traitement est ajouté aux déchets de polysilazane selon un rapport compris entre environ 1:2 entre stabilisateur de traitement et déchets de polysilazane à environ 1:14 entre stabilisateur de traitement et déchets de polysilazane.

10. Procédé selon la revendication 9, dans lequel le stabilisateur de traitement est ajouté aux déchets de polysilazane selon un rapport compris entre environ 1:4 entre stabilisateur de traitement et déchets de polysilazane et environ 1:10 entre stabilisateur de traitement et déchets de polysilazane.

11. Procédé selon la revendication 10, dans lequel le stabilisateur de traitement est ajouté aux déchets de polysilazane selon un rapport compris entre environ 1:6 entre stabilisateur de traitement et déchets de polysilazane et environ 1:9 entre stabilisateur de traitement et déchets de polysilazane.

12. Procédé selon la revendication 11, dans lequel le stabilisateur de traitement est ajouté aux déchets de polysilazane selon un rapport compris entre environ 1:7 entre stabilisateur de traitement et déchets de polysilazane et environ 1:9 entre stabilisateur de traitement et déchets de polysilazane.

13. Utilisation d'un composé contenant un OH et d'un mélange d'un composé contenant un OH et d'un alcalin comme stabilisateur de traitement pour traiter les déchets de polysilazane.

14. Utilisation selon la revendication 13, dans laquelle le stabilisateur de traitement comprend en outre un milieu solvant.
